(19) Europäisches Patentamt
European Patent Office
Office européen des brevets

(11) EP 2 817 640 B1

(12) EUROPÄISCHE PATENTSCHRIFT

(45) Veröffentlichungstag und Bekanntmachung des Hinweises auf die Patenterteilung:
25.07.2018 Patentblatt 2018/30

(21) Anmeldenummer: 13704394.9

(22) Anmeldetag: 04.02.2013

(51) Int Cl.:
$G01P\ 21/00$ (2006.01)

(86) Internationale Anmeldenummer:
PCT/EP2013/052180

(87) Internationale Veröffentlichungsnummer:
WO 2013/124144 (29.08.2013 Gazette 2013/35)

(54) **VERFAHREN ZUM ABGLEICHEN EINES BESCHLEUNIGUNGSSENSORS UND BESCHLEUNIGUNGSSENSOR**

METHOD FOR CALIBRATING AN ACCELERATION SENSOR AND ACCELERATION SENSOR

PROCÉDÉ D'AJUSTAGE D'UN CAPTEUR D'ACCÉLÉRATION ET CAPTEUR D'ACCÉLÉRATION

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 21.02.2012 DE 102012202630

(43) Veröffentlichungstag der Anmeldung:
31.12.2014 Patentblatt 2015/01

(73) Patentinhaber: Robert Bosch GmbH
70442 Stuttgart (DE)

(72) Erfinder: GLUECK, Manuel
72813 St. Johann (DE)

(56) Entgegenhaltungen:
DE-A1-102009 029 216    DE-A1-102011 083 977

• MANUEL GLUECK ET AL: "Autocalibration of MEMS accelerometers", INSTRUMENTATION AND MEASUREMENT TECHNOLOGY CONFERENCE (I2MTC), 2012 IEEE INTERNATIONAL, IEEE, 13. Mai 2012 (2012-05-13), Seiten 1788-1793, XP032196891, DOI: 10.1109/I2MTC.2012.6229157 ISBN: 978-1-4577-1773-4
• GREWAL M S ET AL: "APPLICATION OF KALMAN FILTERING TO THE CALIBRATION AND ALIGNMENT OF INERTIAL NAVIGATION SYSTEMS", PROCEEDINGS OF THE CONFERENCE ON DECISION AND CONTROL. HONOLULU, DEC. 5 - 7, 1990; [PROCEEDINGS OF THE CONFERENCE ON DECISION AND CONTROL], NEW YORK, IEEE, US, Bd. 6 OF 06, 5. Juli 1990 (1990-07-05), Seiten 3325-3334, XP000207307,

**Beschreibung**

Stand der Technik

Die Erfindung geht aus von einem Verfahren nach dem Oberbegriff des Anspruchs 1.

Sensoren, insbesondere mikromechanische Sensoren, wie beispielsweise Beschleunigungs-, Druck-, Magnetfeld- oder Drehratensensoren, werden in vielfältigen Einsatzgebieten eingesetzt. Durch Prozessstreuungen während der Sensorfertigung müssen die Sensoren auf das jeweilige Einsatzgebiet abgeglichen werden. Aus dem Stand der Technik ist bekannt, den Abgleich eines Beschleunigungssensors anhand des langzeitstabilen und temperaturunabhängigen Gravitationsvektors durchzuführen. Beispielsweise ist aus der Druckschrift DE 10 2009 029 216 A1 ein Verfahren zum Selbstabgleich eines dreiachsigen Beschleunigungssensors im Betrieb bekannt, bei welchem mittels eines Abgleichalgorithmus in einem Ruhezustand überprüft wird, ob der Betrag der gemessenen Beschleunigung dem Betrag der Erdbeschleunigung entspricht. Dabei werden die Kalibrierungsparameter Sensitivität und der Offset, sowie deren jeweilige Varianz mittels eines gemeinsamen Kalmans-Filters geschätzt.

Bei den bekannten Methoden wird zur Erkennung, ob eine Störbeschleunigung vorliegt oder nicht, ein NIS-Wert (NIS = $(\underline{y} - \underline{\hat{y}}) \cdot S^{-1} \cdot (\underline{y} - \underline{\hat{y}})$) innerhalb des Kalmanfilters als Entscheidungskriterum herangezogen. Der Parameter S stellt dabei die Innovations-Kovarianzmatrix dar, y die gemessene Größe (nachfolgend auch als Messwert bezeichnet) und $\underline{\hat{y}}$ die geschätzte Größe. Eine überlagerte Störbeschleunigung mit vergleichsweise großer Amplitude und Dynamik kann durch diese Methode, vor allem während der Anfangsphase der Kalibrierung, jedoch nicht sicher detektiert werden. Sollten die Kalibrierungsparameter noch sehr ungenau bekannt sein, kommt es dann zu einer Fehlkalibrierung des Sensors. DE-A1-10 2011 083977 ist nach dem Anmeldetag der vorliegenden Anmeldung veröffentlicht und zeigt ein Verfahren zum Kalibrieren eines Beschleunigungssensors und einen solchen Beschleunigungssensor. Es wird ein Hypothesentest zur Überprüfung der Ruhelage des Beschleunigungssensors verwendet. Das Dokument von M. S. Grewal et al: "Application of Kalman filtering to the calibration and alignment of inertial navigation systems" ist nach dem Prioritätstag und vor dem Anmeldetag der vorliegenden Anmeldung veröffentlicht. Es beschreibt ebenfalls ein Verfahren zum Kalibrieren eines Beschleunigungssensors und einen solchen Beschleunigungssensor. Zur Detektion einer Störbeschleunigung wird ein Hypothesentest (t-Test) angewandt

Offenbarung der Erfindung

Das erfindungsgemäße Verfahren und der erfindungsgemäße Beschleunigungssensor gemäß den nebengeordneten Ansprüchen haben gegenüber dem Stand der Technik den Vorteil, dass zur Bestimmung, ob eine Störbeschleunigung vorliegt, ein dem Kalibrierungsverfahren zeitlich vorgelagerter mathematischer Hypothesentest auf den Messwerten durchgeführt wird, mit welchem auch überlagerte Störbeschleunigungen mit hoher Dynamik und großer Amplitude erkannt werden. Wenn eine solche Störbeschleunigung erkannt wird, wird der Kalibrierungsschritt gar nicht erst gestartet bzw. die ermittelten Messwerte werden nicht zur Kalibrierung herangezogen.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Ausführungsform ist vorgesehen, dass im zweiten Verfahrensschritt auf die Messwerte ein mathematischer Hypothesentest in Form eines z-Tests oder eines t-Tests durchgeführt wird. In vorteilhafter Weise wird mit einem z-Test (auch als Gauß-Test bezeichnet) oder einem t-Test eine besonders effiziente Überprüfung dahingehend ermöglicht, ob die Mittelwerte der letzten gespeicherten Messwerte mit dem aktuellen Messwert übereinstimmen.

Gemäß einer bevorzugten Ausführungsform ist vorgesehen, dass zeitlich vor dem ersten Verfahrensschritt durchgeführten nullten Verfahrensschritt eine Vielzahl von weiteren Messwerten der Vergangenheit, welche in Abhängigkeit von den auf den Beschleunigungssensor wirkenden Beschleunigungskräften erzeugt wurden, gespeichert werden, wobei im zweiten Verfahrensschritt aus der Vielzahl von gespeicherten Messwerten Mittelwerte gebildet werden und mittels einer Nullhypothese überprüft wird, ob die Mittelwerte und die im ersten Verfahrensschritt erzeugten Messwerte von der gleichen Normalverteilung stammen. Vorzugsweise wird hierbei die Nullhypothese aufgestellt, dass die Mittelwerte von der gleichen Normalverteilung mit bekannter Varianz stammen ($\underline{U}_S = \underline{U}_K$), oder die Alternativhypothese, dass die Mittelwerte unterschiedlich sind ($\underline{U}_S \neq \underline{U}_K$).

Gemäß einer bevorzugten Ausführungsform ist vorgesehen, dass in Abhängigkeit der Messwerte eine Testvariable durch Dividieren der Differenz aus den berechneten Mittelwerten vom nullten Verfahrensschritt und den Messwerten aus dem ersten Verfahrensschritt durch eine Standardabweichung berechnet wird und wobei die Testvariable mit einem Grenzwert verglichen wird. Die Testvariable z wird vorzugsweise wie Folgt berechnet:

$$z = \frac{\underline{U}_S - \underline{U}_k - \underline{D}}{\sqrt{\dfrac{\sigma_2^2}{n_2} + \dfrac{\sigma_1^2}{n_1}}}$$

Gemäß einer bevorzugten Ausführungsform ist vorgesehen, dass der Grenzwert aus der inversen Normalverteilung oder aus der Students T-Verteilung berechnet wird, wobei ein Signifikanzniveau $\alpha$ vorgegeben wird:

$$\underline{T} = N^{-1}\left(1 - \frac{\alpha}{2}\right)$$

Gemäß einer bevorzugten Ausführungsform ist vorgesehen, dass das Vorliegen einer Störbeschleunigung angenommen wird, wenn der Betrag der Testvariablen größer als der Grenzwert ist. Vorteilhafterweise wird somit ein eindeutiges Entscheidungskriterium geschaffen, welches das Vorliegen einer Störbeschleunigung oder die Abwesenheit einer Störbeschleunigung angibt. Auf diese Weise werden auch Störbeschleunigungen mit hoher Dynamik und großer Amplitude detektiert. Die mathematische Bedingung hierfür lautet insbesondere: |z| >T.

Gemäß einer bevorzugten Ausführungsform ist vorgesehen, dass ein Interrupt erzeugt wird, wenn das Vorliegen einer Störbeschleunigung angenommen wird und wobei die Kalibrierung des Beschleunigungssensors verhindert und/oder abgebrochen wird, wenn der Interrupt detektiert wird. Auf diese Weise wird verhindert, dass der aktuelle Messwert zur Kalibrierung des Beschleunigungssensors verwendet wird, wenn der aktuelle Messwert durch eine Störbeschleunigung beeinflusst ist.

Gemäß einer bevorzugten Ausführungsform ist vorgesehen, dass im dritten Verfahrensschritt der Beschleunigungssensor mittels eines Kalman-Filters und insbesondere eines nicht-linearen Kalman-Filters kalibriert wird, so dass eine effiziente und präzise Abschätzung von Sensitivität und Offset des Beschleunigungssensors während seines Verwendungsmodus (auch als "In-Use-Calibration" bezeichnet) ermöglicht wird. Ein Abgleich am Bandende des Herstellungsprozesses ist somit nicht notwendig.

Ein weiterer Gegenstand der vorliegenden Erfindung ist ein Beschleunigungssensor kalibriert nach dem vorhergehenden Verfahren. Der Beschleunigungssensor umfasst insbesondere einen dreiachsigen Beschleunigungssensor. Vorzugsweise umfasst der Beschleunigungssensor einen mikromechanischen Beschleunigungssensor, welcher vorzugsweise in einem Standardhalbleiterherstellungsprozess hergestellt ist.

Ausführungsbeispiele der vorliegenden Erfindung sind in den Zeichnungen dargestellt und in der nachfolgenden Beschreibung näher erläutert.

Kurze Beschreibung der Zeichnungen

Es zeigen

**Figur 1** eine schematische Ansicht eines Verfahrens zum Abgleichen eines Beschleunigungssensors gemäß dem Stand der Technik und
**Figur 2** eine schematische Ansicht eines Verfahrens zum Abgleichen eines Beschleunigungssensors gemäß einer beispielhaften Ausführungsform der vorliegenden Erfindung.

Ausführungsformen der Erfindung

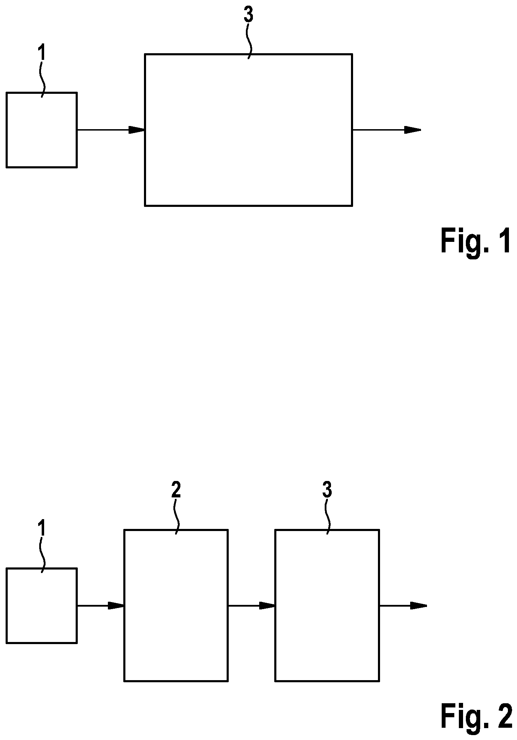

In **Figur 1** eine schematische Ansicht eines Verfahrens zum Abgleichen eines Beschleunigungssensors gemäß dem Stand der Technik dargestellt. In einem ersten Verfahrensschritt werden Messwerte eines dreiachsigen Beschleunigungssensors 1 erzeugt. Die Messwerte sind dabei proportional zu Beschleunigungen entlang der drei Messachsen des Beschleunigungssensors. Der Beschleunigungssensor 1 umfasst beispielsweise ein Substrat und eine relativ zum Substrat entlang der drei Messachsen beweglich aufgehängte seismische Masse. Wenn der Beschleunigungssensor eine Beschleunigung erfährt, wird die seismische Masse aufgrund von Trägheitskräften aus ihrer Ruhelage ausgelenkt.

Die Auslenkung der seismischen Masse wird vorzugsweise kapazitiv, beispielsweise mittels einer Plattenkondensatorstruktur oder einer Fingerelektrodenstruktur, ausgewertet und in ein analoges Sensorsignal gewandelt. Das Sensorsignal ist dabei der Größe der Auslenkung und somit der anliegenden Beschleunigung proportional. Aus dem Sensorsignal können dann entsprechende Messwerte abgeleitet werden.

Die Messwerte werden in einem dritten Schritt 3 an einen Kalmanfilter übergeben. Wenn der Beschleunigungssensor 1 sich in einem Ruhezustand befindet (auch als 1g-Zustand bezeichnet), in welchem lediglich die Erdbeschleunigung (1g) auf den Beschleunigungssensor 1 wirkt, kann anhand der Messwerte eine Abschätzung der Sensitivität und des Offsets des Beschleunigungssensors 1 vorgenommen werden. Eine solche Vorgehensweise geht beispielsweise aus der Druckschrift DE 10 2009 029 216 A1 hervor, dessen Offenbarungsgehalt hiermit durch Bezug einbezogen werden.

In **Figur 2** ist eine schematische Ansicht eines Verfahrens zum Abgleichen eines Beschleunigungssensors 1 gemäß einer beispielhaften Ausführungsform der vorliegenden Erfindung dargestellt. Das erfindungsgemäße Verfahren weist gegenüber dem anhand von Figur 1 beschriebenen Abgleichverfahren einen zusätzlichen Schritt zwischen der Ermittelung der Messwerte (auch als erster Verfahrensschritt bezeichnet) und der Kalibrierung des Beschleunigungssensors 1 (auch als dritter Verfahrensschritt 3 bezeichnet). In dem zusätzlichen Schritt (auch als zweiter Verfahrensschritt 2 bezeichnet) wird geprüft, ob die im ersten Verfahrensschritt vom Beschleunigungssensor 1 erzeugten Messwerte durch eine impulsive Störbeschleunigung beeinflusst sind. Der zweite Verfahrensschritt wird nachfolgend daher auch als Störbeschleunigungserkennung bezeichnet.

Für die impulsive Störbeschleunigungserkennung werden die letzten n Messwerte (auch als weitere Messwerte bezeichnet) gespeichert, insbesondere in dem ersten Verfahrensschritt zeitlich vorausgehenden

nullten Verfahrensschritten.

$$\underline{U}_S = \begin{pmatrix} a_{k-1,x} & \cdots & a_{k-n-1,x} \\ a_{k-1,y} & \cdots & a_{k-n-1,y} \\ a_{k-1,z} & \cdots & a_{k-n-1,z} \end{pmatrix}$$

Mit den Parametern n wird die Empfindlichkeit der Störbeschleunigungserkennung eingestellt. Je größer der Parameter n gewählt wird, desto weniger Störbeschleunigung wird im Signal zugelassen. Anschließend wird anhand des statistischen z-Tests überprüft, ob die Mittelwerte der letzten gespeicherten Beschleunigungswerte mit dem aktuellen gemessenen Messwert übereinstimmen. Hierzu wird die Testvariable z berechnet:

$$z = \frac{\underline{U}_S - \underline{U}_k - \underline{D}}{\sqrt{\frac{\sigma_2^2}{n_2} + \frac{\sigma_1^2}{n_1}}}$$

Dazu wird eine Nullhypothese aufgestellt, dass die Mittelwerte von der gleichen Normalverteilung mit bekannter Varianz stammen

$$(\underline{U}_S = \underline{U}_K)$$

und die Alternativhypothese, dass die Mittelwerte unterschiedlich sind

$$(U_S \neq U_K).$$

Mit diesem zweiseitigen z-Test kann die Überprüfung der Nullhypothese durchgeführt werden. Da eine Gaußverteilung des z-Wertes vorliegt, kann mit Hilfe der inversen Normalverteilung und einem vorgegeben Signifikanzniveau $\alpha$ ein Grenzwert T für die Verwerfung der Nullhypothese errechnet werden:

$$\underline{T} = N^{-1}\left(1 - \frac{\alpha}{2}\right)$$

Unterscheidet sich der aktuelle Messwert signifikant von der Messwerthistorie, ist der Betrag der Testvariablen z der Stichprobenfunktion größer als der errechnete Grenzwert T:

$$|z| > T$$

Daher wird die Nullhypothese verworfen und der aktuelle Messwert nicht an den Kalibrierungsalgorithmus (dritter Verfahrensschritt 3) weitergeleitet. Durch dieses Verfahren ist es nun möglich, unabhängig von der verwendeten In-Use-Kalibrierungsmethode, das Vorliegen einer impulsiven Störbeschleunigung zu erkennen. Wenn die impulsive Störbeschleunigung im zweiten Verfahrensschritt 2 erkannt wird, wird insbesondere ein Interrupt erzeugt, welcher das Weiterleiten des aktuellen Messwertes an den Kalibrierungsalgorithmus (dritter Verfahrensschritt 3 verhindert.

**Patentansprüche**

1. Verfahren zum Abgleichen eines Beschleunigungssensors (1), wobei in einem ersten Verfahrensschritt Messwerte in Abhängigkeit von auf den Beschleunigungssensor wirkenden Beschleunigungskräften erzeugt werden, wobei in einem zweiten Verfahrensschritt (2) die Messwerte dahingehend analysiert werden, ob eine Störbeschleunigung vorliegt, und wobei in einem dritten Verfahrensschritt (3) der Beschleunigungssensor (1) in Abhängigkeit eines mathematischen Filters kalibriert wird, wenn im zweiten Verfahrensschritt (2) keine Störbeschleunigung detektiert wird, **dadurch gekennzeichnet, dass** im zweiten Verfahrensschritt (2) auf die Messwerte ein mathematischer Hypothesentest zur Detektion der Störbeschleunigung durchgeführt wird.

2. Verfahren nach Anspruch 1, wobei im zweiten Verfahrensschritt (2) auf die Messwerte ein mathematischer Hypothesentest in Form eines z-Tests oder eines t-Tests durchgeführt wird.

3. Verfahren nach einem der vorhergehenden Ansprüche, wobei in einem zeitlich vor dem ersten Verfahrensschritt durchgeführten nullten Verfahrensschritt eine Vielzahl von weiteren Messwerten in Abhängigkeit von auf den Beschleunigungssensor (1) wirkenden Beschleunigungskräften erzeugt werden, wobei im zweiten Verfahrensschritt (2) aus der Vielzahl von weiteren Messwerten Mittelwerte gebildet werden und mittels einer Nullhypothese überprüft wird, ob die Mittelwerte und die im ersten Verfahrensschritt erzeugten Messwerte von der gleichen Normalverteilung stammen.

4. Verfahren nach Anspruch 3, wobei in Abhängigkeit der Messwerte eine Testvariable durch Dividieren der Differenz aus den Mittelwerten und den Messwerten durch eine Standardabweichung berechnet wird und wobei die Testvariable mit einem Grenzwert verglichen wird.

5. Verfahren nach Anspruch 4, wobei der Grenzwert aus der inversen Normalverteilung oder aus der Students T-Verteilung berechnet wird.

6. Verfahren nach einem der Ansprüche 4 oder 5, wobei das Vorliegen einer Störbeschleunigung angenommen wird, wenn der Betrag der Testvariablen größer als der Grenzwert ist.

7. Verfahren nach Anspruch 6, wobei ein Interrupt erzeugt wird, wenn das Vorliegen einer Störbeschleunigung angenommen wird und wobei die Kalibrierung des Beschleunigungssensors (1) verhindert und/oder abgebrochen wird, wenn der Interrupt detektiert wird.

8. Verfahren nach einem der vorhergehenden Ansprüche, wobei im dritten Verfahrensschritt (3) der Beschleunigungssensor (1) mittels eines Kalman-Filters und insbesondere eines nicht-linearen Kalman-Filters kalibriert wird.

9. Beschleunigungssensor (1), wobei der Beschleunigungssensor (1) Mittel zum Abgleichen nach einem Verfahren gemäß einem der vorhergehenden Ansprüche aufweist.

## Claims

1. Method for adjusting an acceleration sensor (1), wherein, in a first method step, measurement values are produced depending on acceleration forces that act on the acceleration sensor, wherein, in a second method step (2), the measurement values are analysed to the effect of whether disturbance acceleration is present and wherein, in a third method step (3), the acceleration sensor (1) is calibrated depending on a mathematical filter if no disturbance acceleration is detected in the second method step (2), **characterized in that** a mathematical hypothesis test for detecting the disturbance acceleration is applied to the measurement values in the second method step (2).

2. Method according to Claim 1, wherein, in the second method step (2), a mathematical hypothesis test in the form of a Z-test or a t-test is applied to the measurement values.

3. Method according to any one of the preceding claims, wherein a multiplicity of further measurement values are produced depending on acceleration forces that act on the acceleration sensor (1) in a zeroth method step, carried out in time before the first method step, wherein, in the second method step (2), mean values are formed from the multiplicity of further measurement values and wherein a check is carried out by means of a null hypothesis as to whether the mean values and the measurement values produced in the first method step originate from the same normal distribution.

4. Method according to Claim 3, wherein, depending on the measurement values, a test variable is calculated by dividing the difference of the mean values and the measurement values by a standard deviation and wherein the test variable is compared to a limit value.

5. Method according to Claim 4, wherein the limit value is calculated from the inverse normal distribution or from Student's t-distribution.

6. Method according to either of Claims 4 and 5, wherein the presence of a disturbance acceleration is assumed if the absolute value of the test variable is greater than the limit value.

7. Method according to Claim 6, wherein an interrupt is produced if the presence of a disturbance acceleration is assumed and wherein the calibration of the acceleration sensor (1) is prevented and/or terminated if the interrupt is detected.

8. Method according to any one of the preceding claims, wherein, in the third method step (3), the acceleration sensor (1) is calibrated by means of a Kalman filter and, in particular, a non-linear Kalman filter.

9. Acceleration sensor (1), wherein the acceleration sensor (1) has adjustment means as per a method according to any one of the preceding claims.

## Revendications

1. Procédé d'ajustage d'un capteur d'accélération (1), dans lequel des valeurs de mesure sont générées dans une première étape de procédé en fonction de forces d'accélération agissant sur le capteur d'accélération, dans lequel les valeurs de mesure sont analysées dans une deuxième étape de procédé (2) pour déterminer si une accélération parasite est présente, et dans lequel, dans une troisième étape de procédé (3), le capteur d'accélération (1) est étalonné en fonction d'un filtre mathématique si aucune accélération parasite n'est détectée dans la deuxième étape de procédé (2), **caractérisé en ce que**, dans la deuxième étape de procédé (2), un test d'hypothèse mathématique pour détecter l'accélération parasite est effectué sur les valeurs de mesure.

2. Procédé selon la revendication 1, dans lequel, dans la deuxième étape de procédé (2), un test d'hypothèse mathématique sous la forme d'un test z ou d'un test t est effectué sur les valeurs de mesure.

3. Procédé selon l'une des revendications précédentes, dans lequel une pluralité d'autres valeurs de mesure sont générées dans une étape de procédé zéro effectuée avant la première étape de procédé en fonction de forces d'accélération agissant sur le capteur d'accélération (1), dans lequel, dans la deuxième étape de procédé (2), des moyennes sont calculées à partir de la pluralité d'autres valeurs de mesure et une hypothèse nulle est utilisée pour vérifier si les moyennes et les valeurs de mesure générées dans la première étape de procédé proviennent de la même distribution normale.

4. Procédé selon la revendication 3, dans lequel une variable de test est calculée en divisant la différence entre les valeurs moyennes et les valeurs de mesure par un écart type dépendant des valeurs de mesure, et dans lequel la variable de test est comparée à une valeur limite.

5. Procédé selon la revendication 4, dans lequel la valeur limite est calculée à partir de la distribution normale inverse ou de la distribution T de Students.

6. Procédé selon l'une des revendications 4 ou 5, dans lequel l'existence d'une accélération parasite est supposée lorsque la valeur de la variable de test est supérieure à la valeur limite.

7. Procédé selon la revendication 6, dans lequel une interruption est générée lorsque la présence d'une accélération parasite est supposée et dans lequel l'étalonnage du capteur d'accélération (1) est empêché et/ou interrompu lorsque l'interruption est détectée.

8. Procédé selon l'une des revendications précédentes, dans lequel, dans la troisième étape de procédé (3), le capteur d'accélération (1) est étalonné au moyen d'un filtre de Kalman, en particulier d'un filtre de Kalman non linéaire.

9. Capteur d'accélération (1), dans lequel le capteur d'accélération (1) comporte des moyens d'ajustage conformes à un procédé selon l'une des revendications précédentes.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009029216 A1
- DE 102011083977 A1

**In der Beschreibung aufgeführte Nicht-Patentliteratur**

- **M. S. GREWAL et al.** *Application of Kalman filtering to the calibration and alignment of inertial navigation systems*